# EUROPÄISCHE PATENTSCHRIFT

(11) **EP 4 119 719 B1**
(45) Veröffentlichungstag und Bekanntmachung des Hinweises auf die Patenterteilung: **28.02.2024**
(21) Anmeldenummer: 22180676.3
(22) Anmeldetag: 23.06.2022
(51) Int. Cl.: D06F 39/10, B01D 33/39, B01D 33/11, B01D 33/46

(54) **WÄSCHEPFLEGEGERÄT MIT EINEM FILTERELEMENT**
LAUNDRY CARE DEVICE WITH A FILTER ELEMENT
APPAREIL D'ENTRETIEN DE LINGE DOTÉ D'UN ÉLÉMENT FILTRANT

(30) Priorität: 14.07.2021 DE 102021207458
(43) Veröffentlichungstag der Anmeldung: 18.01.2023
(73) Patentinhaber: BSH Hausgeräte GmbH, 81739 München (DE)
(72) Erfinder: Bischof, Andreas, 10407 Berlin (DE); Eglmeier, Hans, 10587 Berlin (DE)

(56) Entgegenhaltungen:
- CN-A- 106 283 537
- DE-A1-102019 216 696
- US-A1- 2011 146 731
- US-A1- 2013 312 201

## Beschreibung

Die vorliegende Erfindung betrifft ein Wäschepflegegerät mit einem Filterelement.

Bestimmte Gerätevarianten von herkömmlichen Wäschepflegegeräten weisen fluidführende Leitungen auf, durch welche Waschflüssigkeit zum Pflegen der Wäsche geführt wird. Während des Betriebs von herkömmlichen Wäschepflegegeräten werden Verunreinigungen, wie z.B. Flusen, Schmutz, oder Staub, in der Waschflüssigkeit aufgenommen und von der Waschflüssigkeit durch die fluidführenden Leitungen mitgeführt. Um derartige Verunreinigungen aus der Waschflüssigkeit zu filtern, weisen bestimmte Gerätevarianten von herkömmlichen Wäschepflegegeräten Filterelemente auf, welche durch die Waschflüssigkeit durchströmt werden, um die Waschflüssigkeit zu filtern.

Da derartige Filterelemente während des Betriebs des Wäschepflegegeräts durch eine zunehmende Anlagerung von Verunreinigungen verstopfen können, müssen derartige Filterelemente regelmäßig gereinigt werden.

In der DE 10 2016 004 326 A1 ist ein Faserfilter zur Abtrennung von Textilfasern aus Waschmaschinenabwässern offenbart.

In der JP 2014 0686855 ist ein Wäschetrockner mit einem Filter offenbart.

In der DE 10 2019 216 696 A1 ist ein Waeschepflegegerät mit einem Filterelement (105) zum Filtern von Waschfluessigkeit gezeigt. Das Filterelement weist ein verlagerbares Reinigungselement auf, welches in einem Filterinnenraum angeordnet ist und an einer Filtermembran anliegt. Das Reinigungselement kann an der Filtermembran angelagerte Verunreinigungen zumindest abschnittsweise entfernen und komprimieren. Das Filterelement weist außerdem einen Aufnahmebereich auf, um die komprimierten Verunreinigungen (117) aufzunehmen.

In der US 2013/312 201 A1 ist eine Waschmaschine mit einer Filtereinrichtung mit zwei unterschiedlichen Filterwegen offenbart, bei denen die Filterwege durch unterschiedliche Bereiche der Filtermembran und fluidisch getrennte Ablaufleitungen führen.

Es ist die Aufgabe der vorliegenden Erfindung, ein Wäschepflegegerät mit einem Filterelement bereitzustellen, bei dem eine Reduzierung der Filterleistung durch Verstopfungen verhindert werden kann.

Diese Aufgabe wird durch den Gegenstand mit den Merkmalen nach dem unabhängigen Anspruch gelöst. Vorteilhafte Ausführungsformen sind Gegenstand der abhängigen Ansprüche, der Beschreibung und der Zeichnungen.

Gemäß einem Aspekt wird die erfindungsgemäße Aufgabe durch ein Wäschepflegegerät gelöst, mit einem Filterelement, welches in einem Filtergehäuse des Wäschepflegegeräts angeordnet ist, wobei das Filterelement eine Filtermembran mit einem ersten Membranbereich und einem weiteren Membranbereich zum Filtern von Waschflüssigkeit aufweist, wobei die Filtermembran einen Filterinnenraum des Filterelements zumindest abschnittsweise begrenzt, wobei das Filterelement eine Filtereinlassöffnung zum Zuführen von Waschflüssigkeit in den Filterinnenraum aufweist, wobei das Filterelement ausgebildet ist, in den Filterinnenraum durch die Filtereinlassöffnung strömende Waschflüssigkeit durch den ersten und weiteren Membranbereich zu leiten, um Verunreinigungen an der Filtermembran anzulagern und die Verunreinigungen aus der Waschflüssigkeit zu entfernen, wobei das Filtergehäuse eine erste Ablaufkammer und eine weitere Ablaufkammer begrenzt, welche fluidtechnisch voneinander getrennt sind, wobei die erste Ablaufkammer fluidtechnisch mit dem ersten Membranbereich verbunden ist, und wobei die weitere Ablaufkammer fluidtechnisch mit dem weiteren Membranbereich verbunden ist, wobei das Filterelement ein rotierbares Reinigungselement aufweist, welches in dem Filterinnenraum angeordnet ist und an einer Innenseite des ersten und weiteren Membranbereichs anliegt, und wobei das Wäschepflegegerät einen Antrieb aufweist, welcher über eine Antriebswelle des Wäschepflegegeräts mit dem Filterelement verbunden ist, wobei der Antrieb ausgebildet ist, das rotierbare Reinigungselement in dem Filtergehäuse zu rotieren, um an dem ersten und weiteren Membranbereich angelagerte Verunreinigungen zumindest abschnittsweise von der Filtermembran zu entfernen.

Dadurch wird der technische Vorteil erreicht, dass das rotierbare Reinigungselement des Filterelements ein wirksames Entfernen von Verunreinigungen von der Filtermembran sicherstellt. Dadurch, dass das rotierbare Reinigungselement an der Innenseite des ersten und weiteren Membranbereichs des Filterelements anliegt, können durch eine Rotation des rotierbaren Reinigungselements, Verunreinigungen sowohl von dem ersten Membranbereich als auch von dem weiteren Membranbereich entfernt werden.

Dadurch kann während des Betriebs des Filterelements ein Verstopfen der Filtermembran mit Verunreinigungen verhindert werden, so dass eine zeit- und kostenaufwändige manuelle Reinigung des Filterelements oder gar ein Austausch des Filterelements verhindert wird.

Durch die beiden unterschiedlichen Membranbereiche des Filterelements stehen zwei unterschiedliche Filterwege in dem Filterelement zur Verfügung.

Wenn die Waschflüssigkeit durch den ersten Membranbereich des Filterelements geleitet und anschließend durch die erste Ablaufkammer aus dem Filtergehäuse abgeführt wird, kann beispielsweise eine mit der ersten Ablaufkammer verbundene erste Pumpe des Wäschepflegegeräts die Waschflüssigkeit wirksam aus dem Filterelement pumpen. Die erste Pumpe kann beispielsweise eine erste Pumpe zum Abpumpen der Waschflüssigkeit aus dem Wäschepflegegerät oder eine erste Pumpe zum Umpumpen der Waschflüssigkeit in dem Wäschepflegegerät umfassen.

Wenn die Waschflüssigkeit andererseits durch den weiteren Membranbereich des Filterelements geleitet und anschließend über die weitere Ablaufkammer aus dem Filtergehäuse abgeführt wird, kann beispielsweise eine mit der weiteren Ablaufkammer verbundene zweite Pumpe des Wäschepflegegeräts die Waschflüssigkeit wirksam aus dem Filterelement pumpen. Die zweite Pumpe kann im Gegensatz zur ersten Pumpe beispielsweise eine zweite Pumpe zum Umpumpen der Waschflüssigkeit in dem Wäschepflegegerät oder eine zweite Pumpe zum Abpumpen der Waschflüssigkeit aus dem Wäschepflegegerät umfassen.

Somit kann durch eine Anpassung von Filterparametern, z.B. Porengrößen, der beiden unterschiedlichen Membranbereiche des Filterelements für die beiden unterschiedlichen Filterwege jeweils unterschiedliche Filterleistungen je nach Anwendungsfall erreicht werden. Hierbei lassen sich die Filterparameter des ersten und weiteren Membranbereichs flexibel einstellen. Beispielsweise kann die Fläche des ersten Membranbereichs, wenn dieser zum Umpumpen genutzt werden soll, größer ausgelegt werden als die Fläche des zweiten Membranbereichs, wenn dieser zum Abpumpen genutzt werden soll.

Gleichzeitig können durch die Verwendung des rotierbaren Reinigungselements beide Membranbereiche durch ein einziges Bauteil gereinigt werden, so dass auch nur ein einziger Antrieb und eine einzige Antriebswelle zum Rotieren des rotierbaren Reinigungselements in dem Wäschepflegegerät vorhanden sein muss.

Somit ist eine preisgünstige und kompakte Gestaltung des Wäschepflegegeräts möglich.

Insbesondere umfasst der weitere Membranbereich des Filterelements einen einzigen weiteren Membranbereich des Filterelements und umfasst die weitere Ablaufkammer eine einzige weitere Ablaufkammer, so dass in diesem Fall das Filterelement zwei Membranbereiche und das Filtergehäuse zwei Ablaufkammern aufweist.

Alternativ kann insbesondere der weitere Membranbereich des Filterelements eine Mehrzahl von weiteren Membranbereichen des Filterelements umfassen, und kann insbesondere die weitere Ablaufkammer eine Mehrzahl von weiteren Ablaufkammer umfassen, welche fluidtechnisch voneinander getrennt sind, so dass in diesem Fall das Filterelement eine Mehrzahl von Membranbereichen und das Filtergehäuse eine Mehrzahl von Ablaufkammern aufweist.

Insbesondere ist der Antrieb ausgebildet ist, das rotierbare Reinigungselement in dem Filtergehäuse in einer ersten Rotationsrichtung und/oder einer der ersten Rotationsrichtung entgegengesetzten zweiten Rotationsrichtung zu rotieren.

Insbesondere ist der Antrieb ausgebildet, das rotierbare Reinigungselement für einen bestimmten Zeitbereich oder kontinuierlich in der ersten oder zweiten Rotationsrichtung zu rotieren.

Insbesondere ist der Antrieb ausgebildet, das rotierbare Reinigungselement in dem Filtergehäuse abwechselnd, insbesondere periodisch abwechselnd, in einer ersten Rotationsrichtung und in einer der ersten Rotationsrichtung entgegengesetzten zweiten Rotationsrichtung zu rotieren.

Insbesondere ist der Antrieb ausgebildet, das rotierbare Reinigungselement nur in einem bestimmten Winkelbereich in dem Filtergehäuse abwechselnd, insbesondere periodisch abwechselnd, der ersten Rotationsrichtung und in der der ersten Rotationsrichtung entgegengesetzten zweiten Rotationsrichtung zu rotieren. Der bestimmte Winkelbereich kann hierbei in der ersten und zweiten Rotationsrichtung insbesondere jeweils einen Winkelbereich zwischen 0° und 120° umfassen.

Insbesondere strömt die Waschflüssigkeit aus dem Filterinnenraum radial, insbesondere von dem Filterinnenraum in einen Außenraum des Filterelements, durch den ersten und weiteren Membranbereich der Filtermembran, um Verunreinigungen in der Waschflüssigkeit zu entfernen.

Insbesondere ist eine Trennung zwischen dem ersten und weiteren Membranbereich des Filterelements entlang eines Umfangs des Filterelements oder parallel zu einer Längsachse des Filterelements angeordnet.

Insbesondere umfasst die Filtermembran, insbesondere der erste und weitere Membranbereich eine Folie und/oder eine Gaze.

Insbesondere weist das Filtergehäuse einen Aufnahmeeinsatz auf, in welchem das Filterelement aufgenommen ist, wobei der Aufnahmeeinsatz zumindest eine Filtergehäusewand, insbesondere eine erste und zweite Filtergehäusewand, aufweist, welche an dem Filterelement anliegt, um das Filterelement in dem Aufnahmeeinsatz zu stabilisieren.

Insbesondere ist zwischen der zumindest einen Filtergehäusewand und dem Filterelement eine Dichtung angeordnet, um eine fluidtechnische Abdichtung sicherzustellen.

Insbesondere ist das Filterelement als eine einstückige Baugruppe ausgeführt.

Unter einem Wäschepflegegerät wird ein Gerät verstanden, welches zur Wäschepflege eingesetzt wird, wie z.B. eine Waschmaschine oder ein Wäschetrockner. Insbesondere wird unter solch einem Wäschepflegegerät ein Haushaltswäschepflegegerät verstanden. Also ein Wäschepflegegerät, welches im Rahmen der Haushaltsführung verwendet wird, und mit dem Wäsche in haushaltsüblichen Mengen behandelt wird.

In einer vorteilhaften Ausführungsform weist die erste Ablaufkammer eine erste Ablauföffnung auf, welche ausgebildet ist, durch den ersten Membranbereich in die erste Ablaufkammer strömende Waschflüssigkeit aus dem Filtergehäuse abzuführen, und/oder weist die weitere Ablaufkammer eine weitere Ablauföffnung auf, welche ausgebildet ist, durch den weiteren Membranbereich in die weitere Ablaufkammer strömende Waschflüssigkeit aus dem Filtergehäuse abzuführen.

Dadurch wird der technische Vorteil erreicht, dass durch die unterschiedlichen Ablauföffnungen die durch den jeweiligen Membranbereich des Filterelements gefilterte Waschflüssigkeit entlang unterschiedlicher Fluidwege geleitet werden kann.

In einer vorteilhaften Ausführungsform weist das Wäschepflegegerät zumindest eine Pumpe auf, welche mit der ersten und/oder weiteren Ablaufkammer, insbesondere mit der ersten und/oder weiteren Ablauföffnung, fluidtechnisch verbunden ist, wobei die zumindest eine Pumpe ausgebildet ist, Waschflüssigkeit aus der ersten und/oder weiteren Ablaufkammer abzupumpen.

Dadurch wird der technische Vorteil erreicht, dass durch die zumindest eine Pumpe ein wirksames Abpumpen von Waschflüssigkeit aus der ersten und weiteren Ablaufkammer sichergestellt werden kann, wobei die abgepumpte Waschflüssigkeit je nach Ausgestaltung der Pumpe gemeinsam oder getrennt zur weiteren Anwendung weitergepumpt werden kann.

In einer vorteilhaften Ausführungsform weist das Wäschepflegegerät eine erste Pumpe auf, welche mit der ersten Ablaufkammer, insbesondere mit der ersten Ablauföffnung, fluidtechnisch verbunden ist, und ausgebildet ist, Waschflüssigkeit aus der ersten Ablaufkammer abzupumpen, und weist das Wäschepflegegerät eine zweite Pumpe auf, welche mit der weiteren Ablaufkammer, insbesondere mit der weiteren Ablauföffnung fluidtechnisch verbunden ist, und ausgebildet ist, Waschflüssigkeit aus der weiteren Ablaufkammer abzupumpen.

Dadurch wird der technische Vorteil erreicht, dass durch die Kombination von zwei Pumpen, welche jeweils mit einer der beiden fluidtechnisch voneinander getrennten Ablaufkammern verbunden sind, die aus der ersten und weiteren Ablaufkammer abgepumpte Waschflüssigkeit entlang unterschiedlicher Fluidwegen innerhalb des Wäschepflegegeräts geleitet werden. Beispielsweise kann die erste Pumpe zum Abpumpen der Waschflüssigkeit aus dem Wäschepflegegerät und kann die zweite Pumpe zum Umpumpen von Waschflüssigkeit in dem Wäschepflegegerät ausgebildet sein oder umgekehrt.

In einer vorteilhaften Ausführungsform begrenzt das Filtergehäuse eine Zulaufkammer, welche eine Zulauföffnung des Filtergehäuses mit der Filtereinlassöffnung des Filterelements fluidtechnisch verbindet, um durch die Zulauföffnung in die Zulaufkammer strömende Waschflüssigkeit durch die Filtereinlassöffnung in den Filterinnenraum des Filterelements einzuführen.

Dadurch wird der technische Vorteil erreicht, dass durch die Zulaufkammer, bzw. durch die Zulauföffnung, z.B. durch ein Ventil eine wirksame Regulation der Menge der dem Filterelement zugeführten Waschflüssigkeit erreicht werden kann.

In einer vorteilhaften Ausführungsform weist das Wäschepflegegerät eine weitere Pumpe auf, welche mit der Filtereinlassöffnung, insbesondere mit der Zulauföffnung, fluidtechnisch verbunden ist, wobei die weitere Pumpe ausgebildet ist, Waschflüssigkeit, insbesondere durch die Zulauföffnung, in die Filtereinlassöffnung zu pumpen, wobei das Wäschepflegegerät ein erstes Ventil, welches mit der ersten Ablaufkammer fluidtechnisch verbunden ist, aufweist, wobei das erste Ventil ausgebildet ist, eine erste Ablauföffnung der ersten Ablaufkammer fluidtechnisch zu schließen oder fluidtechnisch freizugeben, und wobei das Wäschepflegegerät ein weiteres Ventil, welches mit der weiteren Ablaufkammer fluidtechnisch verbunden ist, aufweist, wobei das weitere Ventil ausgebildet ist, eine weitere Ablauföffnung der weiteren Ablaufkammer fluidtechnisch zu schließen oder fluidtechnisch freizugeben.

Dadurch wird der technische Vorteil erreicht, dass durch die weitere Pumpe und die Ventile eine wirksame Regulation des Volumenstroms der durch das Filterelement strömenden Waschflüssigkeit erreicht werden kann.

In einer vorteilhaften Ausführungsform unterscheiden sich der erste Membranbereich und der weitere Membranbereich durch zumindest einen der folgenden Parameter, Anzahl der Poren, Porengröße, Außenfläche, Material, Querschnittsfläche, oder Kombinationen davon.

Dadurch wird der technische Vorteil erreicht, dass je nach Parameterauswahl eine vorteilhafte Einstellbarkeit der Filterleistung, bzw. der Filtereigenschaften des jeweiligen ersten, bzw. weiteren Membranbereichs sichergestellt werden kann. Insbesondere weist der weitere Membranbereich eine geringere Porengröße als der erste Membranbereich auf. Insbesondere kann einer der beiden Membranbereiche aus einem metallischen Material und kann der andere der beiden Membranbereiche aus einem Kunststoffbauteil, insbesondere Kunststoffspritzgussformteil, geformt sein.

In einer vorteilhaften Ausführungsform sind der erste und weitere Membranbereich der Filtermembran einstückig gebildet. Insbesondere kann der erste und weitere Membranbereich der Filtermembran durch einen Verbindungsbereich, insbesondere Naht, miteinander verbunden sein.

Dadurch wird der technische Vorteil erreicht, dass eine besonders kompakte Ausgestaltung des Filterelements erreicht werden kann.

In einer vorteilhaften Ausführungsform sind der erste und weitere Membranbereich lösbar, insbesondere formschlüssig und/oder kraftschlüssig miteinander verbunden.

Dadurch wird der technische Vorteil erreicht, dass beispielsweise der erste und weitere Membranbereich separat voneinander aus dem Filtergehäuse entnommen werden können, beispielsweise um eine Reinigung durchzuführen.

In einer vorteilhaften Ausführungsform weist das Filterelement einen Stützrahmen auf, welcher an einer dem Filterinnenraum abgewandten Außenseite der Filtermembran angeordnet ist, und ausgebildet ist, die Filtermembran zu stützen.

Dadurch wird der technische Vorteil erreicht, dass der Stützrahmen eine strukturelle Stabilität des Filterelements sicherstellt, und insbesondere ein nach außen gerichtetes Durchbiegen des ersten und weiteren Membranbereichs begrenzt. Insbesondere umfasst der Stützrahmen ein einziges Stützrahmenelement oder eine Mehrzahl von miteinander verbundenen Stützrahmenelementen. Insbesondere ist der zumindest eine Stützrahmen als zumindest ein Kunststoffspritzgussformteil geformt.

In einer vorteilhaften Ausführungsform weist das Filterelement eine Zylinderform, eine konische Form oder eine ebene Form auf, wobei die entsprechende Zylindermantelfläche, Konusmantelfläche oder ebene Fläche des Filterelements den ersten und zweiten Membranbereich der Filtermembran umfasst.

Dadurch wird der technische Vorteil erreicht, dass durch die Ausbildung der Zylindermantelfläche, Konusmantelfläche oder ebenen Fläche des Filterelements als Filtermembran eine anpassbare Fläche des Filterelements zur Filtration der Verunreinigungen verwendet werden kann, so dass eine angepasste Filterleistung des Filterelements sichergestellt werden kann.

In einer vorteilhaften Ausführungsform weist das rotierbare Reinigungselement eine Nabe auf, welche mit der Antriebswelle verbunden ist, wobei sich von der Nabe eine Mehrzahl von Flügeln erstrecken, welche endseitig an der Innenseite des ersten und weiteren Membranbereichs der Filtermembran anliegen, um bei einer Rotation des rotierbaren Reinigungselements an dem ersten und weiteren Membranbereich der Filtermembran angelagerte Verunreinigungen zumindest abschnittsweise von der Filtermembran zu entfernen.

Dadurch wird der technische Vorteil erreicht, dass die rotierenden Flügel des rotierbaren Reinigungselements ein wirksames Abstreifen von Verunreinigungen sowohl von der Innenseite des ersten als auch des weiteren Membranbereichs sicherstellen. Insbesondere sind die Flügel als gekrümmte Flügel ausgebildet, insbesondere als konvex oder konkav gekrümmte Flügel, ausgebildet.

Insbesondere umfasst die Mehrzahl von Flügel zwei, drei, vier, fünf, sechs, sieben, acht, neun oder zehn Flügel, insbesondere drei Flügel.

Insbesondere sind die Flügel rotationsymmetrisch an der Nabe angeordnet. Bei eine Anzahl von drei Flügeln schließen insbesondere jeweils benachbarte Flügel einen Winkel von 120° zueinander ein.

In einer vorteilhaften Ausführungsform sind die Flügel als elastisch verformbare Flügel ausgebildet, welche endseitig einen Kontaktbereich aufweisen, welcher an der Innenseite ersten und weiteren Membranbereichs der Filtermembran anliegt.

Dadurch wird der technische Vorteil erreicht, dass die Elastizität der Flügel ein wirksames Andrücken des jeweiligen Kontaktbereichs an die Innenseite der Filtermembran sicherstellt, so dass der jeweilige Kontaktbereich der Flügel ein wirksames Abstreifen von Verunreinigungen von dem ersten und zweiten Membranbereich sicherstellt.

In einer vorteilhaften Ausführungsform weist das rotierbare Reinigungselement einen ersten Elementbereich, welcher an dem ersten Membranbereich der Filtermembran angeordnet ist, und einen zweiten Elementbereich, welcher an dem weiteren Membranbereich der Filtermembran angeordnet ist, auf, wobei an dem ersten und zweiten Elementbereich jeweils eine Mehrzahl von Flügeln angeordnet ist, um eine wirksame Reinigung des ersten und weiteren Membranbereichs der Filtermembran sicherzustellen.

Insbesondere weist das rotierbare Reinigungselement an dem ersten und zweiten Elementbereich die gleiche oder eine unterschiedliche Anzahl von Flügeln auf.

Insbesondere weisen die Flügel in dem ersten Elementbereich die gleiche oder eine unterschiedliche Form als die Flügel in dem weiteren Membranbereich auf.

Dadurch wird der technische Vorteil erreicht, dass durch die entsprechende Variation der Zahl und/oder Form der Flügel in dem ersten und zweiten Elementbereich unterschiedliche Reinigungswirkungen in dem ersten und weiteren Membranbereich des Filterelements erreicht werden können. Insbesondere kann durch eine vergrößerte Anzahl der Flügel an einem der beiden Membranbereich in dem jeweiligen Membranbereich die effektive Rotationsgeschwindigkeit erhöht werden.

In einer vorteilhaften Ausführungsform weist das rotierbare Reinigungselement eine Schraubenform auf, um bei einer Rotation des rotierbaren Reinigungselements die von der Filtermembran entfernen Verunreinigungen entlang einer Längsrichtung des Filterelements zu fördern, insbesondere in einen in dem Filtergehäuse geformten Aufnahmebereich zum Aufnehmen der Verunreinigungen.

Dadurch wird der technische Vorteil erreicht, dass in dem Filterinnenraum aufgenommene Verunreinigungen durch die Schraubenform des rotierbare Reinigungselements vorteilhaft aus dem Filterinnenraum herausgefördert werden können, und in dem Aufnahmebereich vorteilhaft aufgenommen werden können.

Weitere Ausführungsbeispiele werden Bezug nehmend auf die beiliegenden Zeichnungen erläutert. Es zeigen:
- Fig. 1: eine schematische Ansicht eines Wäschepflegegeräts;
- Fig. 2: eine perspektivische Ansichten eines Filterelements eines Wäschepflegegeräts; und
- Fig. 3: eine schematische Ansicht eines rotierbaren Reinigungselements eines Filterelements eines Wäschepflegegeräts.

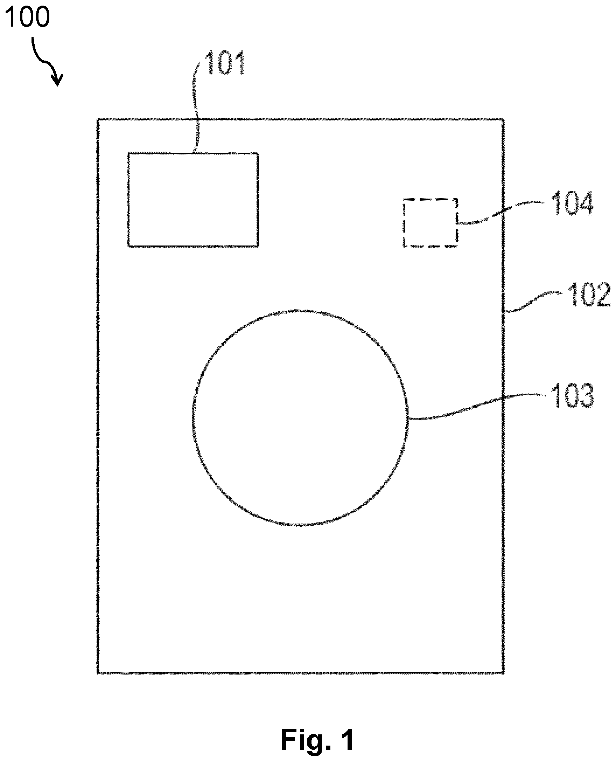

Fig. 1 zeigt eine schematische Ansicht eines Wäschepflegegeräts 100, wie z.B. eine Waschmaschine. Das Wäschepflegegerät 100 umfasst eine Einspülschale 101, in die Waschpflegesubstanz, wie z.B. Waschmittel, eingefüllt werden kann. Das Wäschepflegegerät 100 umfasst eine Tür 103 zum Beladen des Wäschepflegegerätes 100 mit Wäsche.

Das Wäschepflegegerät 100 weist ein Gerätegehäuse 102 und eine in Fig. 1 nur schematisch dargestellte Steuerung 104 auf.

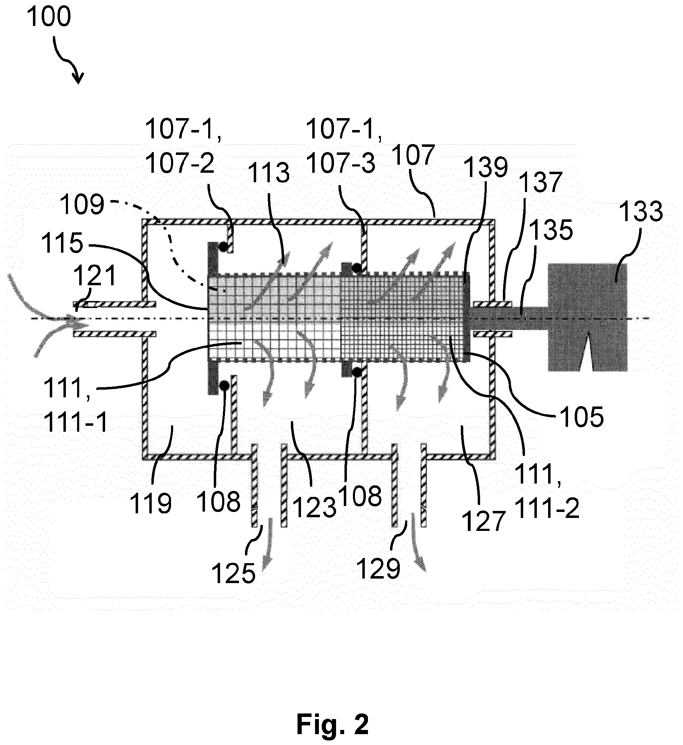

Fig. 2 zeigt eine perspektivische Ansichten eines Filterelements eines Wäschepflegegeräts. In Fig. 2 ist eine Schnittansicht des Filterelements 105 dargestellt.

Das Filterelement 105 ist in einem Filtergehäuse 107 des Wäschepflegegeräts 100 angeordnet. Hierbei weist das Filtergehäuse 107 insbesondere einen Aufnahmeeinsatz 107-1 auf, in welchem das Filterelement 105 aufgenommen ist. Der Aufnahmeeinsatz 107-1 weist insbesondere eine erste Filtergehäusewand 107-2 und eine zweite Filtergehäusewand 107-3 auf, welche an dem Filterelement 105 anliegen, um das Filterelement 105 in dem Aufnahmeeinsatz 107-1 zu stabilisieren. Hierbei sind Dichtungselemente 108 an der ersten und zweiten Filtergehäusewand 107-2, 107-3 angeordnet, um eine wirksame fluiddichte Abtrennung sicherzustellen.

Wie in der Fig. 2 dargestellt ist, weist das Filterelement 105 eine Filtermembran 111 zum Filtern von Waschflüssigkeit 113 auf, wobei die Filtermembran 111 hierbei einen in Fig. 2 nur schematisch dargestellten Filterinnenraum 109 des Filterelements 105 zumindest abschnittsweise begrenzt. Das Filterelement 105 weist eine Filtereinlassöffnung 115 zum Zuführen von Waschflüssigkeit 113 in den Filterinnenraum 109 auf.

Die Filtermembran 111 weist hierbei einen ersten Membranbereich 111-1 und einen weiteren Membranbereich 111-2 auf.

Wie in der Fig. 2 schematisch dargestellt ist, ist das Filterelement 105 ausgebildet, in den Filterinnenraum 109 durch die Filtereinlassöffnung 115 strömende Waschflüssigkeit 113 durch den ersten und weiteren Membranbereich 111-1, 111-2 der Filtermembran 111 zu leiten, um in der Fig. 2 nicht dargestellte Verunreinigungen an der Filtermembran 111 abzulagern, und dadurch die Verunreinigungen aus der Waschflüssigkeit 113 zu entfernen.

Wie aus der Fig. 2 zu entnehmen ist, weist das Filterelement 105 insbesondere eine Zylinderform auf, wobei die Zylindermantelfläche des Filterelements 105 insbesondere die Filtermembran 111, umfassend den ersten und weiteren Membranbereich 111-1, 111-2 umfasst. Somit wird die Filtermembran 111 von der Waschflüssigkeit 113 von dem Filterinnenraum 109 aus radial nach außen durchströmt und die Verunreinigungen verbleiben an der Innenseite des ersten und weiteren Membranbereichs 111-1, 111-2 der Filtermembran 111.

Alternativ oder zusätzlich zu der in Fig. 2 dargestellten Zylinderform des Filterelements 105 kann das Filterelement 105 zumindest abschnittsweise eine konische Form und/oder eine ebene Form aufweisen, wobei in diesem Fall insbesondere eine entsprechende Konusmantelfläche und/oder ebene Fläche des Filterelements 105 den ersten und weiteren Membranbereich 111-1, 111-2 der Filtermembran 111 umfasst.

Wie in der Fig. 2 lediglich schematisch dargestellt ist, weist der weitere Membranbereich 111-2 im Vergleich zum ersten Membranbereich 111-1 insbesondere eine geringere Porengröße der Filtermembran 111 auf, so dass der weitere Membranbereich 111-2 im Vergleich zum ersten Membranbereich 111-1 ausgebildet ist, Verunreinigungen mit einem geringeren Partikeldurchmesser an der Filtermembran 111 anzulagern und aus der Waschflüssigkeit 113 zu entfernen.

Durch die unterschiedlichen Porengrößen des ersten, bzw. weiteren Membranbereichs 111-1, 111-2 der Filtermembran 111 kann somit eine Grobfilterung, und eine Feinfilterung erreicht werden.

Auch wenn dies in der Fig. 2 nicht dargestellt ist, kann sich der erste und weitere Membranbereichs 111-1, 111-2 durch zumindest einen der folgenden Parameter unterscheiden, Anzahl der Poren, Porengröße, Außenfläche, Material, Querschnittsfläche oder Kombinationen davon.

Insbesondere kann der erste und weitere Membranbereich 111-1, 111-2 der Filtermembran 111 einstückig gebildet sein, so dass keine physische Trennung zwischen dem ersten und weiteren Membranbereich 111-1, 111-2 vorliegt. In diesem Fall kann das Filterelement 105 einen in Fig. 2 nicht dargestellten Stützrahmen, insbesondere aus einem Kunststoffspritzgussteil, aufweisen, welcher sowohl den ersten und weiteren Membranbereich 111-1, 111-2 außenseitig stützt.

Alternativ können auch der erste und weitere Membranbereich 111-1, 111-2 innerhalb des Filterelements 105 lösbar miteinander verbunden sein, insbesondere formschlüssig und/oder kraftschlüssig miteinander verbunden sein, wobei in diesem Fall insbesondere eine Mehrzahl von Stützrahmenelementen, insbesondere aus Kunststoffspritzgussteilen, den ersten und weiteren Membranbereich 111-1, 111-2 außenseitig stützen.

Wie in der Fig. 2 dargestellt ist, begrenzt das Filtergehäuse 107 eine optional vorhandene Zulaufkammer 119, welche eine Zulauföffnung 121 des Filtergehäuses 107 mit der Filtereinlassöffnung 115 fluidtechnisch verbindet, um durch die Zulauföffnung 121 in die Zulaufkammer 119 strömende Waschflüssigkeit 113 durch die Filtereinlassöffnung 115 in den Filterinnenraum 109 des Filterelements 105 einzuführen.

Das Filtergehäuse 107 begrenzt ferner eine erste Ablaufkammer 123, welche eine erste Ablauföffnung 125 des Filtergehäuses 107 mit dem ersten Membranbereich 111-1 der Filtermembran 111 fluidtechnisch verbindet, um durch den ersten Membranbereich 111-1 der Filtermembran 111 strömende Waschflüssigkeit 113 durch die erste Ablaufkammer 123 und durch die erste Ablauföffnung 125 aus dem Filtergehäuse 107 abzuführen.

Das Filtergehäuse 107 begrenzt ferner eine weitere Ablaufkammer 127, welche von der ersten Ablaufkammer 123 fluidtechnisch getrennt ist. Die weitere Ablaufkammer 127 verbindet eine weitere Ablauföffnung 129 des Filtergehäuses 107 mit dem weiteren Membranbereich 111-2 der Filtermembran 111 fluidtechnisch. Der weitere Membranbereich 111-2 weist im Vergleich zum ersten Membranbereich 111-1 eine geringere Porengröße der Filtermembran 111 auf.

Hierbei weist das Wäschepflegegerät 100 insbesondere eine in Fig. 2 nicht dargestellte erste Pumpe auf, welche mit der ersten Ablauföffnung 125 fluidtechnisch verbunden ist, und ausgebildet ist, Waschflüssigkeit 113 aus der ersten Ablaufkammer 123 abzupumpen.

Hierbei weist das Wäschepflegegerät 100 insbesondere eine in Fig. 2 nicht dargestellte zweite Pumpe auf, welche mit der weiteren Ablauföffnung 129 fluidtechnisch verbunden ist, und ausgebildet ist, Waschflüssigkeit 113 aus der weiteren Ablaufkammer 127 abzupumpen.

Alternativ zu den beiden ablaufseitigen Pumpen kann das Wäschepflegegerät 100 zumindest eine weitere Pumpe aufweisen, welche mit der Zulauföffnung 121 fluidtechnisch verbunden ist, wobei die zumindest eine weitere Pumpe ausgebildet ist, Waschflüssigkeit 113 in die Zulauföffnung 121 zu pumpen. Hierbei weist das Wäschepflegegerät 100 ein in Fig. 2 nicht dargestelltes erstes Ventil auf, welches mit der ersten Ablauföffnung 125 fluidtechnisch verbunden ist, wobei das erste Ventil ausgebildet ist, die erste Ablauföffnung 125 fluidtechnisch freizugeben, bzw. fluidtechnisch zu sperren.

Hierbei weist das Wäschepflegegerät 100 ein in Fig. 2 nicht dargestelltes zweites Ventil auf, welches mit der weitere Ablauföffnung 129 fluidtechnisch verbunden ist, wobei das zweite Ventil ausgebildet ist, die weitere Ablauföffnung 129 fluidtechnisch freizugeben, bzw. fluidtechnisch zu sperren.

Somit kann der erste und weitere Membranbereich 111-1, 111-2 der Filtermembran 111, welcher jeweils mit der erste, bzw. weiteren Ablaufkammer 123, 127 verbunden ist, für unterschiedliche Pumpszenarien, insbesondere Abpumpen und Umpumpen, verwendet werden, so dass über ein einziges Filterelement 105 beide Pumpwege bedient werden können.

Auch wenn das in der Fig. 2 nicht dargestellt ist, ist ein wesentlicher Aspekt der Ausführungsform, dass das Filterelement 105 ein rotierbares Reinigungselement 131 aufweist, welches in dem Filterinnenraum 109 angeordnet ist und an einer Innenseite des ersten und weiteren Membranbereichs 111-1, 111-2 der Filtermembran 111 anliegt.

Das Wäschepflegegerät 100 weist hierbei einen Antrieb 133 auf, welcher über eine Antriebswelle 135 des Wäschepflegegeräts 100 mit dem Filterelement 105 verbunden ist. Der Antrieb 133 ist ausgebildet, das rotierbare Reinigungselement 131 in dem Filtergehäuse 107 zu rotieren, um an der Filtermembran 111 angelagerte Verunreinigungen zumindest abschnittsweise von der Filtermembran 111 zu entfernen.

Hierbei ist die Antriebswelle 135 durch eine Filtergehäuseöffnung 137 des Filtergehäuses 107 geführt und mit einer Kontaktplatte 139 des Filterelements 105 verbunden, um eine Rotationsbewegung der Antriebswelle 135 in eine Rotationsbewegung des Filterelements 105 zu überführen.

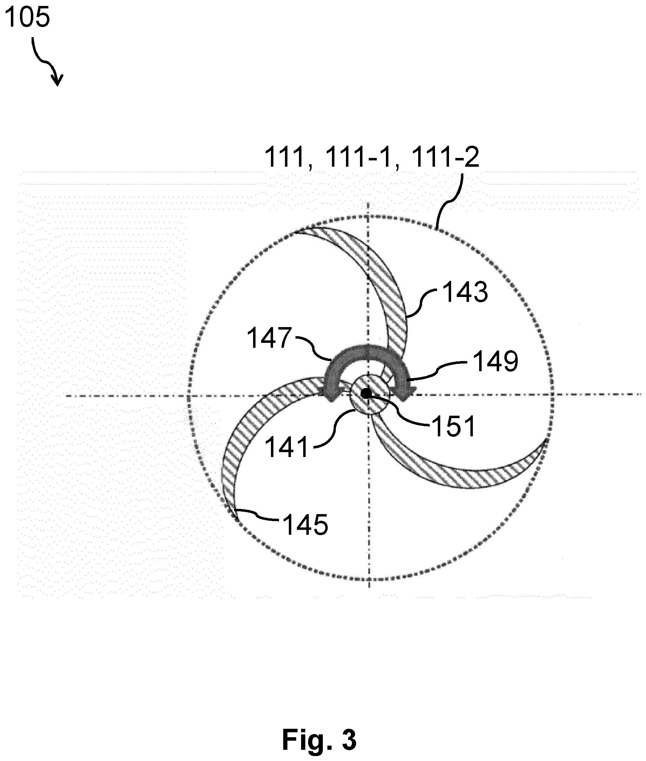

Für weitere Details zum rotierbaren Reinigungselement 131 wird auf die Ausführungen zur Fig. 3 verwiesen.

Fig. 3 zeigt eine schematische Ansicht eines rotierbaren Reinigungselements eines Filterelements eines Wäschepflegegeräts.

In der Fig. 3 ist ein Querschnitt durch das in Fig. 2 dargestellte Filterelement 105 gezeigt, wobei jedoch das Filtergehäuse 107 des Wäschepflegegeräts 100 in der Fig. 3 nicht dargestellt ist.

Das insbesondere zylinderförmige Filterelement 105 weist eine Filtermembran 111 auf, welche einen in Fig. 3 nur schematisch dargestellten ersten und zweiten Membranbereich 111-1, 111-2 aufweist.

Das Filterelement 105 weist ein rotierbares Reinigungselement 131 auf, welches eine Nabe 141 aufweist, welche mit der in Fig. 3 nicht dargestellten Antriebswelle 135 verbunden ist. Das rotierbare Reinigungselement 131 weist eine Mehrzahl von, insbesondere drei, Flügel 143 auf, welche sich von der Nabe 141 aus erstrecken. Die Flügel 143 sind insbesondere gekrümmt ausgebildet. Die Flügel 143 sind insbesondere als elastisch verformbare Flügel 143 ausgebildet. Die Flügel 143 weisen insbesondere jeweils einen Kontaktbereich 145 auf, welcher an der Innenseite der Filtermembran 111 anliegt. Dadurch wird durch die Flügel 143 ein Druck auf die Innenseite der Filtermembran 111 ausgeübt, welcher ein wirksames Anliegen der Kontaktbereiche 145 an der Innenseite der Filtermembran 111 sicherstellt.

Auch wenn dies in der Fig. 3 nicht dargestellt ist, kann das rotierbare Reinigungselement 131 einen ersten und einen weiteren Elementbereich aufweisen, welcher jeweils an dem ersten und weiteren Membranbereich 111-1, 111-2 angeordnet ist, wobei das rotierbare Reinigungselement 131 in dem ersten und zweiten Elementbereich die gleiche oder eine unterschiedliche Anzahl von Flügeln 143 aufweist, so dass eine wirksame Reinigung des ersten und weiteren Membranbereichs 111-1, 111-2 sichergestellt werden kann.

Wie in der Fig. 3 lediglich schematisch dargestellt ist, resultiert die Rotation der Antriebswelle 135 in einer Rotation des Filterelements 105 in einer ersten Rotationsrichtung 147 und/oder in einer der ersten Rotationsrichtung 147 entgegengesetzten zweiten Rotationsrichtung 149 in Bezug auf eine sich durch die Nabe 141 entlang der Längsrichtung des Filterelements 105 erstreckenden Rotationsachse 151, so dass an der Innenseite der Filtermembran 111 anliegende Verunreinigungen wirksam entfernt werden können.

Insbesondere ist der Antrieb 133 ausgebildet die Antriebswelle 135 zur abwechselnden, insbesondere periodisch abwechselnden, Rotation des rotierbaren Reinigungselements 131 in einer ersten Rotationsrichtung 147 und in der zweiten Rotationsrichtung 149 anzutreiben, so dass Verunreinigungen von einem Abschnitt des ersten, bzw. weiteren Membranbereichs 111-1, 111-2 der Filtermembran 111 entfernt werden können und die Verunreinigungen in einem anderen Abschnitt des ersten, bzw. weiteren Membranbereichs 111-1, 111-2 der Filtermembran 111 angelagert werden können.

Der Schutzbereich der vorliegenden Erfindung ist durch die Ansprüche gegeben und wird durch die in der Beschreibung erläuterten oder den Figuren gezeigten Merkmale nicht beschränkt.

### Bezugszeichenliste

- 100: Wäschepflegegerät
- 101: Einspülschale
- 102: Gerätegehäuse
- 103: Tür
- 104: Steuerung
- 105: Filterelement
- 107: Filtergehäuse
- 107-1: Aufnahmeeinsatz
- 107-2: Erste Filtergehäusewand
- 107-3: Zweite Filtergehäusewand
- 108: Dichtungselement
- 109: Filterinnenraum
- 111: Filtermembran
- 111-1: Erster Membranbereich
- 111-2: Weiterer Membranbereich
- 113: Waschflüssigkeit
- 115: Filtereinlassöffnung
- 119: Zulaufkammer
- 121: Zulauföffnung
- 123: Erste Ablaufkammer
- 125: Erste Ablauföffnung
- 127: Weitere Ablaufkammer
- 129: Weitere Ablauföffnung
- 131: Rotierbares Reinigungselement
- 133: Antrieb
- 135: Antriebswelle
- 137: Filtergehäuseöffnung
- 139: Kontaktplatte
- 141: Nabe
- 143: Flügel
- 145: Kontaktbereich
- 147: Erste Rotationsrichtung
- 149: Zweite Rotationsrichtung
- 151: Rotationsachse

## Patentansprüche

1. Wäschepflegegerät (100) mit einem Filterelement (105), welches in einem Filtergehäuse (107) des Wäschepflegegeräts (100) angeordnet ist, wobei das Filterelement (105) eine Filtermembran (111) mit einem ersten Membranbereich (111-1) und einem weiteren Membranbereich (111-2) zum Filtern von Waschflüssigkeit (113) aufweist, wobei die Filtermembran (111) einen Filterinnenraum (109) des Filterelements (105) zumindest abschnittsweise begrenzt, wobei das Filterelement (105) eine Filtereinlassöffnung (115) zum Zuführen von Waschflüssigkeit (113) in den Filterinnenraum (109) aufweist, wobei das Filterelement (105) ausgebildet ist, in den Filterinnenraum (109) durch die Filtereinlassöffnung (115) strömende Waschflüssigkeit (113) durch den ersten und weiteren Membranbereich (111-1, 111-2) zu leiten, um Verunreinigungen an der Filtermembran (111) anzulagern und die Verunreinigungen aus der Waschflüssigkeit (113) zu entfernen, wobei
das Filterelement (105) ein rotierbares Reinigungselement (131) aufweist, welches in dem Filterinnenraum (109) angeordnet ist und an einer Innenseite des ersten und weiteren Membranbereichs (111-1, 111-2) anliegt, und dass
das Wäschepflegegerät (100) einen Antrieb (133) aufweist, welcher über eine Antriebswelle (135) des Wäschepflegegeräts (100) mit dem Filterelement (105) verbunden ist, wobei der Antrieb (133) ausgebildet ist, das rotierbare Reinigungselement (131) in dem Filtergehäuse (107) zu rotieren, um an dem ersten und weiteren Membranbereich (111-1, 111-2) angelagerte Verunreinigungen zumindest abschnittsweise von der Filtermembran (111) zu entfernen,
**dadurch gekennzeichnet, dass** das Filtergehäuse (107) eine erste Ablaufkammer (123) und eine weitere Ablaufkammer (127) begrenzt, welche fluidtechnisch voneinander getrennt sind, wobei die erste Ablaufkammer (123) fluidtechnisch mit dem ersten Membranbereich (111-1) verbunden ist, und wobei die weitere Ablaufkammer (127) fluidtechnisch mit dem weiteren Membranbereich (111-2) verbunden ist.

2. Wäschepflegegerät (100) nach Anspruch 1, **dadurch gekennzeichnet, dass** die erste Ablaufkammer (123) eine erste Ablauföffnung (125) aufweist, welche ausgebildet ist, durch den ersten Membranbereich (111-1) in die erste Ablaufkammer (123) strömende Waschflüssigkeit (113) aus dem Filtergehäuse (107) abzuführen, und/oder dass die weitere Ablaufkammer (127) eine weitere Ablauföffnung (129) aufweist, welche ausgebildet ist, durch den weiteren Membranbereich (111-2) in die weitere Ablaufkammer (127) strömende Waschflüssigkeit (113) aus dem Filtergehäuse (107) abzuführen.

3. Wäschepflegegerät (100) nach Anspruch 1 oder 2, **dadurch gekennzeichnet, dass** das Wäschepflegegerät (100) zumindest eine Pumpe aufweist, welche mit der ersten und/oder weiteren Ablaufkammer (123, 127), insbesondere mit der ersten und/oder weiteren Ablauföffnung (125, 129), fluidtechnisch verbunden ist, wobei die zumindest eine Pumpe ausgebildet ist, Waschflüssigkeit (113) aus der ersten und/oder weiteren Ablaufkammer (123, 127) abzupumpen.

4. Wäschepflegegerät (100) nach Anspruch 3, **dadurch gekennzeichnet, dass** das Wäschepflegegerät (100) eine erste Pumpe aufweist, welche mit der ersten Ablaufkammer (123), insbesondere mit der ersten Ablauföffnung (125), fluidtechnisch verbunden ist, und ausgebildet ist, Waschflüssigkeit (113) aus der ersten Ablaufkammer (123) abzupumpen, und wobei das Wäschepflegegerät (100) eine zweite Pumpe aufweist, welche mit der weiteren Ablaufkammer (127), insbesondere mit der weiteren Ablauföffnung (129) fluidtechnisch verbunden ist, und ausgebildet ist, Waschflüssigkeit (113) aus der weiteren Ablaufkammer (127) abzupumpen.

5. Wäschepflegegerät (100) nach einem der vorangehenden Ansprüche, **dadurch gekennzeichnet, dass** das Filtergehäuse (107) eine Zulaufkammer (119) begrenzt, welche eine Zulauföffnung (121) des Filtergehäuses (107) mit der Filtereinlassöffnung (115) des Filterelements (105) fluidtechnisch verbindet, um durch die Zulauföffnung (121) in die Zulaufkammer (119) strömende Waschflüssigkeit (113) durch die Filtereinlassöffnung (115) in den Filterinnenraum (109) des Filterelements (105) einzuführen.

6. Wäschepflegegerät (100) nach einem der vorangehenden Ansprüche, **dadurch gekennzeichnet, dass** das Wäschepflegegerät (100) eine weitere Pumpe aufweist, welche mit der Filtereinlassöffnung (115), insbesondere mit der Zulauföffnung (121), fluidtechnisch verbunden ist, wobei die weitere Pumpe ausgebildet ist, Waschflüssigkeit (113), insbesondere durch die Zulauföffnung (121), in die Filtereinlassöffnung (115) zu pumpen, wobei das Wäschepflegegerät (100) ein erstes Ventil, welches mit der ersten Ablaufkammer (123) fluidtechnisch verbunden ist, aufweist, wobei das erste Ventil ausgebildet ist, eine erste Ablauföffnung (125) der ersten Ablaufkammer (123) fluidtechnisch zu schließen oder fluidtechnisch freizugeben, und wobei das Wäschepflegegerät (100) ein weiteres Ventil, welches mit der weiteren Ablaufkammer (127) fluidtechnisch verbunden ist, aufweist, wobei das weitere Ventil ausgebildet ist, eine weitere Ablauföffnung (129) der weiteren Ablaufkammer (127) fluidtechnisch zu schließen oder fluidtechnisch freizugeben.

7. Wäschepflegegerät (100) nach einem der vorangehenden Ansprüche, **dadurch gekennzeichnet, dass** sich der erste Membranbereich (111-1) und der weitere Membranbereich (111-2) durch zumindest einen der folgenden Parameter unterscheiden, Anzahl der Poren, Porengröße, Außenfläche, Material, Querschnittsfläche, oder Kombinationen davon.

8. Wäschepflegegerät (100) nach einem der vorangehenden Ansprüche, **dadurch gekennzeichnet, dass** der erste und weitere Membranbereich (111-1, 111-2) der Filtermembran (111) einstückig gebildet sind.

9. Wäschepflegegerät (100) nach einem der Ansprüche 1 bis 7, **dadurch gekennzeichnet, dass** der erste und weitere Membranbereich (111-1, 111-2) lösbar, insbesondere formschlüssig und/oder kraftschlüssig miteinander verbunden sind.

10. Wäschepflegegerät (100) nach einem der vorangehenden Ansprüche, **dadurch gekennzeichnet, dass** das Filterelement (105) einen Stützrahmen aufweist, welcher an einer dem Filterinnenraum (109) abgewandten Außenseite der Filtermembran (111) angeordnet ist, und ausgebildet ist, die Filtermembran (111) zu stützen.

11. Wäschepflegegerät (100) nach einem der vorangehenden Ansprüche, **dadurch gekennzeichnet, dass** das Filterelement (105) eine Zylinderform, eine konische Form oder eine ebene Form aufweist, und wobei die entsprechende Zylindermantelfläche, Konusmantelfläche oder ebene Fläche des Filterelements (105) den ersten und zweiten Membranbereich (111-1, 111-2) der Filtermembran (111) umfasst.

12. Wäschepflegegerät (100) nach einem der vorangehenden Ansprüche, **dadurch gekennzeichnet, dass** das rotierbare Reinigungselement (131) eine Nabe (141) aufweist, welche mit der Antriebswelle (135) verbunden ist, wobei sich von der Nabe (141) eine Mehrzahl von Flügeln (143) erstrecken, welche endseitig an der Innenseite des ersten und weiteren Membranbereichs (111-1, 111-2) der Filtermembran (111) anliegen, um bei einer Rotation des rotierbaren Reinigungselements (131) an dem ersten und weiteren Membranbereich (111-1, 111-2) der Filtermembran (111) angelagerte Verunreinigungen zumindest abschnittsweise von der Filtermembran (111) zu entfernen.

13. Wäschepflegegerät (100) nach Anspruch 12, **dadurch gekennzeichnet, dass** die Flügel (143) als elastisch verformbare Flügel (143) ausgebildet sind, welche endseitig einen Kontaktbereich (145), aufweisen, welcher an der Innenseite des ersten und weiteren Membranbereichs (111-1, 111-2) der Filtermembran (111) anliegt.

14. Wäschepflegegerät (100) nach Anspruch 12 oder 13, **dadurch gekennzeichnet, dass** das rotierbare Reinigungselement (131) einen ersten Elementbereich, welcher an dem ersten Membranbereich (111-1) der Filtermembran (111) angeordnet ist, und einen zweiten Elementbereich, welcher an dem weiteren Membranbereich (111-2) der Filtermembran (111) angeordnet ist, aufweist, wobei an dem ersten und zweiten Elementbereich jeweils eine Mehrzahl von Flügeln (143) angeordnet ist, um eine wirksame Reinigung des ersten und weiteren Membranbereichs (111-1, 111-2) der Filtermembran (111) sicherzustellen.

15. Wäschepflegegerät (100) nach einem der vorangehenden Ansprüche, **dadurch gekennzeichnet, dass** das rotierbare Reinigungselement (131) eine Schraubenform aufweist, um bei einer Rotation des rotierbaren Reinigungselements (131) die von der Filtermembran (111) entfernen Verunreinigungen entlang einer Längsrichtung des Filterelements (105) zu fördern, insbesondere in einen in dem Filtergehäuse (107) geformten Aufnahmebereich zum Aufnehmen der Verunreinigungen.

## Claims

1. Laundry care appliance (100) with a filter element (105), which is arranged in a filter housing (107) of the laundry care appliance (100), wherein the filter element (105) has a filter membrane (111) with a first membrane region (111-1) and a further membrane region (111-2) for filtering washing liquid (113), wherein the filter membrane (111) delimits a filter interior (109) of the filter element (105), at least in sections, wherein the filter element (105) has a filter inlet opening (115) for supplying washing liquid (113) into the filter interior (109), wherein the filter element (105) is embodied to conduct washing liquid (113), which flows into the filter interior (109) through the filter inlet opening (115), through the first and further membrane region (111-1, 111-2), in order to accumulate impurities on the filter membrane (111) and remove the impurities from the washing liquid (113), wherein
the filter element (105) has a rotatable cleaning element (131), which is arranged in the filter interior (109) and rests against an inner side of the first and further membrane region (111-1, 111-2), and that
the laundry care appliance (100) has a drive (133), which is connected to the filter element (105) via a drive shaft (135) of the laundry care appliance (100), wherein the drive (133) is embodied to rotate the rotatable cleaning element (131) in the filter housing (107), in order to remove impurities, which have accumulated on the first and further membrane region (111-1, 111-2), from the filter membrane (111), at least in sections,
**characterised in that** the filter housing (107) delimits a first drain chamber (123) and a further drain chamber (127), which are separated from one another from a fluid perspective, wherein the first drain chamber (123) is connected to the first membrane region (111-1) from a fluid perspective, and wherein the further drain chamber (127) is connected to the further membrane region (111-2) from a fluid perspective.

2. Laundry care appliance (100) according to claim 1, **characterised in that** the first drain chamber (123) has a first drain opening (125), which is embodied to discharge washing liquid (113), which is flowing through the first membrane region (111-1) into the first drain chamber (123), from the filter housing (107), and/or that the further drain chamber (127) has a further drain opening (129), which is embodied to discharge washing liquid (113), which is flowing through the further membrane region (111-2) into the further drain chamber (127), from the filter housing (107).

3. Laundry care appliance (100) according to claim 1 or 2, **characterised in that** the laundry care appliance (100) has at least one pump, which is connected to the first and/or further drain chamber (123, 127), in particular to the first and/or further drain opening (125, 129), from a fluid perspective, wherein the at least one pump is embodied to pump washing liquid (113) out from the first and/or further drain chamber (123, 127).

4. Laundry care appliance (100) according to claim 3, **characterised in that** the laundry care appliance (100) has a first pump, which is connected to the first drain chamber (123), in particular to the first drain opening (125), from a fluid perspective, and is embodied to pump washing liquid (113) out from the first drain chamber (123), and wherein the laundry care appliance (100) has a second pump, which is connected to the further drain chamber (127), in particular to the further drain opening (129), from a fluid perspective, and is embodied to pump washing liquid (113) out from the further drain chamber (127).

5. Laundry care appliance (100) according to one of the preceding claims, **characterised in that** the filter housing (107) delimits a supply chamber (119), which connects a supply opening (121) of the filter housing (107) to the filter inlet opening (115) of the filter element (105) from a fluid perspective, in order to introduce washing liquid, which is flowing through the supply opening (121) into the supply chamber (119), through the filter inlet opening (115) into the filter interior (109) of the filter element (105).

6. Laundry care appliance (100) according to one of the preceding claims, **characterised in that** the laundry care appliance (100) has a further pump, which is connected to the filter inlet opening (115), in particular to the supply opening (121), from a fluid perspective, wherein the further pump is embodied to pump washing liquid (113), in particular through the supply opening (121), into the filter inlet opening (115), wherein the laundry care appliance (100) has a first valve, which is connected to the first drain chamber (123) from a fluid perspective, wherein the first valve is embodied to close a first drain opening (125) of the first drain chamber (123) from a fluid perspective or release it from a fluid perspective, and wherein the laundry care appliance (100) has a further valve, which is connected to the further drain chamber (127) from a fluid perspective, wherein the further valve is embodied to close a further drain opening (129) of the further drain chamber (127) from a fluid perspective or release it from a fluid perspective.

7. Laundry care appliance (100) according to one of the preceding claims, **characterised in that** the first membrane region (111-1) and the further membrane region (111-2) differ by way of at least one of the following parameters: number of pores, pore size, outer area, material, cross-section area, or combinations thereof.

8. Laundry care appliance (100) according to one of the preceding claims, **characterised in that** the first and further membrane region (111-1, 111-2) of the filter membrane (111) are formed in one piece.

9. Laundry care appliance (100) according to one of claims 1 to 7, **characterised in that** the first and further membrane region (111-1, 111-2) are connected to one another in a releasable manner, in particular with a positive fit and/or a non-positive fit.

10. Laundry care appliance (100) according to one of the preceding claims, **characterised in that** the filter element (105) has a supporting frame, which is arranged on an outer side of the filter membrane (111) facing away from the filter interior (109) and is embodied to support the filter membrane (111).

11. Laundry care appliance (100) according to one of the preceding claims, **characterised in that** the filter element (105) has a cylindrical shape, a conical shape or a flat shape, and wherein the corresponding cylindrical peripheral area, conical peripheral area or flat area of the filter element (105) comprises the first and second membrane region (111-1, 111-2) of the filter membrane (111).

12. Laundry care appliance (100) according to one of the preceding claims, **characterised in that** the rotatable cleaning element (131) has a hub (141), which is connected to the drive shaft (135), wherein a plurality of blades (143), which on the end face rest against the inner side of the first and further membrane region (111-1, 111-2) of the filter membrane (111), extend from the hub (141), in order to remove impurities that have accumulated on the first and further membrane region (111-1, 111-2) of the filter membrane (111) from the filter membrane (111), at least in sections, on rotation of the rotatable cleaning element (131).

13. Laundry care appliance (100) according to claim 12, **characterised in that** the blades (143) are embodied as elastically deformable blades (143), which on the end face have a contact region (145) which rests against the inner side of the first and further membrane region (111-1, 111-2) of the filter membrane (111).

14. Laundry care appliance (100) according to claim 12 or 13, **characterised in that** the rotatable cleaning element (131) has a first element region, which is arranged on the first membrane region (111-1) of the filter membrane (111), and a second element region, which is arranged on the further membrane region (111-2) of the filter membrane (111), wherein a plurality of blades (143) are arranged on the first and second element region in each case, in order to ensure an effective cleaning of the first and further membrane region (111-1, 111-2) of the filter membrane (111).

15. Laundry care appliance (100) according to one of the preceding claims, **characterised in that** the rotatable cleaning element (131) has a screw shape, in order to convey the impurities removed from the filter membrane (111) along a longitudinal direction of the filter element (105) on rotation of the rotatable cleaning element (131), in particular into a receiving region shaped in the filter housing (107) for receiving the impurities.

## Revendications

1. Appareil d'entretien de linge (100) doté d'un élément filtrant (105), lequel est disposé dans un corps de filtre (107) de l'appareil d'entretien de linge (100), dans lequel l'élément filtrant (105) présente une membrane filtrante (111) avec une première zone de membrane (111-1) et une autre zone de membrane (111-2) pour filtrer du liquide de lavage (113), dans lequel la membrane filtrante (111) limite au moins par endroits un espace interne filtrant (109) de l'élément filtrant (105), dans lequel l'élément filtrant (105) présente une ouverture d'admission filtrante (115) pour l'alimentation du liquide de lavage (113) dans l'espace interne filtrant (109), dans lequel l'élément filtrant (105) est conçu pour diriger dans l'espace interne filtrant (109) à travers la première et l'autre zone de membrane (111-1, 111-2) du liquide de lavage (113) coulant par l'ouverture d'admission filtrante (115), pour fixer des impuretés sur la membrane filtrante (111) et éliminer les impuretés du liquide de lavage (113), dans lequel
l'élément filtrant (105) présente un élément de nettoyage rotatif (131), lequel est disposé dans l'espace interne filtrant (109) et est adjacent à un côté interne de la première et de l'autre zone de membrane (111-1, 111-2), et en ce que
l'appareil d'entretien de linge (100) présente un dispositif d'entraînement (133) qui est relié à l'élément filtrant (105) par un arbre d'entraînement (135) de l'appareil d'entretien de linge (100), dans lequel le dispositif d'entrainement (133) est conçu pour faire tourner l'élément de nettoyage rotatif (131) dans le corps de filtre (107) pour éliminer de la membrane filtrante (111), au moins par endroits, des impuretés fixées sur la première et l'autre zone de membrane (111-1, 111-2),
**caractérisé en ce que** le corps de filtre (107) limite une première chambre d'écoulement (123) et une autre chambre d'écoulement (127), lesquelles sont séparées l'une de l'autre en termes de technique des fluides, dans lequel la première chambre d'écoulement (123) est reliée en termes de technique des fluides à la première zone de membrane (111-1), et dans lequel l'autre chambre d'écoulement (127) est reliée en termes de technique des fluides à l'autre zone de membrane (111-2).

2. Appareil d'entretien de linge (100) selon la revendication 1, **caractérisé en ce que** la première chambre d'écoulement (123) présente une première ouverture d'écoulement (125), laquelle est conçue pour évacuer du corps de filtre (107) du liquide de lavage (113) coulant dans la première chambre d'écoulement (123) à travers la première zone de membrane (111-1), et/ou **en ce que** l'autre chambre d'écoulement (127) présente une autre ouverture d'écoulement (129), laquelle est conçue pour évacuer du corps de filtre (107) du liquide de lavage (113) coulant dans l'autre chambre d'écoulement (127) à travers l'autre zone de membrane (111-2).

3. Appareil d'entretien de linge (100) selon la revendication 1 ou 2, **caractérisé en ce que** l'appareil d'entretien de linge (100) présente au moins une pompe, laquelle est reliée en termes de technique des fluides à la première et/ou l'autre chambre d'écoulement (123, 127), plus particulièrement à la première et/ou l'autre ouverture d'écoulement (125, 129), dans lequel la au moins une pompe est conçue pour pomper du liquide de lavage (113) dans la première et/ou l'autre chambre d'écoulement (123, 127).

4. Appareil d'entretien de linge (100) selon la revendication 3, **caractérisé en ce que** l'appareil d'entretien de linge (100) présente une première pompe, laquelle est reliée en termes de technique des fluides à la première chambre d'écoulement (123), plus particulièrement à la première ouverture d'écoulement (125), et est conçue pour pomper du liquide de lavage (113) dans la première chambre d'écoulement (123), et dans lequel l'appareil d'entretien de linge (100) présente une deuxième pompe, laquelle est reliée en termes de technique des fluides à l'autre chambre d'écoulement (127), plus particulièrement à l'autre ouverture d'écoulement (129), et est conçue pour pomper du liquide de lavage (113) dans l'autre chambre d'écoulement (127).

5. Appareil d'entretien de linge (100) selon l'une des revendications précédentes, **caractérisé en ce que** le corps de filtre (107) limite une chambre d'alimentation (119), laquelle relie, en termes de technique des fluides, une ouverture d'alimentation (121) du corps de filtre (107) à l'ouverture d'admission filtrante (115) de l'élément filtrant (105), pour introduire du liquide de lavage (113), coulant dans la chambre d'alimentation (119) par l'ouverture d'alimentation (121), dans l'espace interne filtrant (109) de l'élément filtrant (105) par l'ouverture d'admission filtrante (115).

6. Appareil d'entretien de linge (100) selon l'une des revendications précédentes, **caractérisé en ce que** l'appareil d'entretien de linge (100) présente une autre pompe, laquelle est reliée en termes de technique des fluides à l'ouverture d'admission filtrante (115), plus particulièrement à l'ouverture d'alimentation (121), dans lequel l'autre pompe est conçue pour pomper du liquide de lavage (113), plus particulièrement par l'ouverture d'alimentation (121), dans l'ouverture d'admission filtrante (115), dans lequel l'appareil d'entretien de linge (100) présente une première soupape, laquelle est reliée en termes de technique des fluides à la première chambre d'écoulement (123), dans lequel la première soupape est conçue, pour fermer en termes de technique des fluides ou libérer en termes de technique des fluides une première ouverture d'écoulement (125) de la première chambre d'écoulement (123), et dans lequel l'appareil d'entretien de linge (100) présente une autre soupape, laquelle est reliée en termes de technique des fluides à l'autre chambre d'écoulement (127), dans lequel l'autre soupape est conçue pour fermer en termes de technique des fluides ou libérer en termes de technique des fluides une autre ouverture d'écoulement (129) de l'autre chambre d'écoulement (127).

7. Appareil d'entretien de linge (100) selon l'une des revendications précédentes, **caractérisé en ce que** la première zone de membrane (111-1) et l'autre zone de membrane (111-2) se différencient par au moins l'un des paramètres suivants : nombre de pores, dimension des pores, surface externe, matériau, surface de la section, ou combinaisons de ceux-ci.

8. Appareil d'entretien de linge (100) selon l'une des revendications précédentes, **caractérisé en ce que** la première et l'autre zone de membrane (111-1, 111-2) de la membrane filtrante (111) sont formées d'une seule pièce.

9. Appareil d'entretien de linge (100) selon l'une des revendications 1 à 7, **caractérisé en ce que** la première et l'autre zone de membrane (111-1, 111-2) sont reliées ensemble d'une manière détachable, plus particulièrement par engagement positif et/ou par l'influence d'une force.

10. Appareil d'entretien de linge (100) selon l'une des revendications précédentes, **caractérisé en ce que** l'élément filtrant (105) présente un cadre de support, lequel est disposé sur un côté externe de la membrane filtrante, opposé à l'espace interne filtrant (109), et est conçu pour soutenir la membrane filtrante (111).

11. Appareil d'entretien de linge (100) selon l'une des revendications précédentes, **caractérisé en ce que** l'élément filtrant (105) présente une forme cylindrique, une forme conique ou une forme plane, et dans lequel la surface enveloppante cylindrique, la surface enveloppante conique ou la surface plane correspondante de l'élément filtrant (105) comprend la première et la deuxième zone de membrane (111-1, 111-2) de la membrane filtrante (111).

12. Appareil d'entretien de linge (100) selon l'une des revendications précédentes, **caractérisé en ce que** l'élément de nettoyage rotatif (131) présente un moyeu (141), lequel est relié à l'arbre d'entraînement (135), dans lequel du moyeu (141) s'étend une pluralité d'ailettes (143), lesquelles à l'extrémité sont adjacentes au côté interne de la première et de l'autre zone de membrane (111-1, 111-2) de la membrane filtrante (111), pour éliminer lors d'une rotation de l'élément de nettoyage rotatif (131), au moins par endroits de la membrane filtrante, des impuretés fixées sur la première et l'autre zone de membrane (111-1, 111-2) de la membrane filtrante (111).

13. Appareil d'entretien de linge (100) selon la revendication 12, **caractérisé en ce que** les ailettes (143) sont conçues comme des ailettes (143) déformables élastiquement, lesquelles présentent à l'extrémité une zone de contact (145), laquelle est adjacente au côté interne de la première et de l'autre zone de membrane (111-1, 111-2) de la membrane filtrante (111).

14. Appareil d'entretien de linge (100) selon la revendication 12 ou 13, **caractérisé en ce que** l'élément de nettoyage rotatif (131) présente une première zone d'élément, laquelle est disposée sur la première zone de membrane (111-1) de la membrane filtrante (111), et une deuxième zone d'élément, laquelle est disposée sur l'autre zone de membrane (111-2) de la membrane filtrante (111), dans lequel est disposée sur la première et la deuxième zone d'élément à chaque fois une pluralité d'ailettes (143) pour garantir un nettoyage efficace de la première et de l'autre zone de membrane (111-1, 111-2) de la membrane filtrante (111).

15. Appareil d'entretien de linge (100) selon l'une des revendications précédentes, **caractérisé en ce que** l'élément de nettoyage rotatif (131) présente une forme de vis pour, lors d'une rotation de l'élément de nettoyage rotatif (131), acheminer les impuretés éliminées de la membrane filtrante (111) le long d'un sens longitudinal de l'élément filtrant (105), plus particulièrement dans une zone de réception formée dans le corps de filtre (107) pour recevoir les impuretés.
